# EUROPEAN PATENT APPLICATION

(11) **EP 2 108 672 A1**
(43) Date of publication of application: **14.10.2009**
(21) Application number: 09251071.8
(22) Date of filing: 09.04.2009
(51) Int. Cl.: C08G 65/336, C08K 3/36, C08L 71/02

(54) **Room temperature curable fluoropolyether rubber composition and cured product**

(30) Priority: 09.04.2008 JP 2008101583
(71) Applicant: Shin-Etsu Chemical Co., Ltd., Tokyo (JP)
(72) Inventor: Yamaguchi, Hiromasa, Annaka-shi Gunma-ken (JP); Shiono, Mikio, Annaka-shi Gunma-ken (JP)
(74) Representative: Stoner, Gerard Patrick

(57) **Abstract**

A fluoropolyether rubber composition comprising (A) a polyfluoro compound having at least two alkenyl groups, (B) a fluorinated organohydrogenpolysiloxane having at least one perfluorooxyalkyl, perfluoroalkyl, perfluorooxyalkylene or perfluoroalkylene group and at least two Si-H groups, (C) a platinum group compound, (D) hydrophobic silica powder, and (E) an antioxidant cures briefly at room temperature into a product having the advantages of solvent resistance, chemical resistance, heat resistance, low-temperature properties, low moisture permeability, and electrical properties.

## Description

### TECHNICAL FIELD

This invention relates to fluoropolyether rubber compositions which briefly cure at room temperature into products having the advantages of solvent resistance, chemical resistance, heat resistance, low-temperature properties, low moisture permeability and electrical properties.

### BACKGROUND

Fluoroelastomer compositions which cure by an addition reaction between alkenyl groups and hydrosilyl groups are known in the art. These compositions can be cured by brief heating. The cured products have excellent solvent resistance, chemical resistance, heat resistance low-temperature properties, low moisture permeability and excellent electrical properties. The compositions are used in many industrial applications where such properties are required.

In electric and electronic parts and other applications, when substrates and devices having relatively low heat resistance are to be protected, heating may be avoided in forming protective films. In such situations, it is difficult to cure to completion fluoroelastomer compositions of the addition reaction cure type.

One known solution to this problem is by increasing the amount of platinum group compound as a hydrosilylation catalyst so as to lower the curing temperature. However, if a high concentration of platinum group compound is present in an uncured elastomer composition, alkenyl and other organic groups on a polyfluoro compound as the base component are vulnerable to oxidative degradation over time, and the oxidized products can affect the catalyst activity. This exacerbates the storage stability of such compositions.

Also proposed are curable fluoroelastomer compositions utilizing condensation reaction of alkoxysilyl or hydroxysilyl groups. Since curing to depth takes several days, parts require a lapse of time between formation and service use. Low productivity is a problem.

Under the circumstances, there is a need for a fluoroelastomer composition which cures briefly at room temperature into a product having the advantages of solvent resistance, chemical resistance, heat resistance, low-temperature properties, low moisture permeability, electrical properties and which is shelf stable.
Citation List
Patent Document 1: JP-A 8-225742 (USP 5,486,565)
Patent Document 2: JP 3748054
(USP 6,740,725, EP 1273618)

An object herein is to provide new and useful fluoropolyether rubber compositions, methods of making and using them and cured products thereof. In preferred embodiments, the composition cures briefly at room temperature and has the advantages of solvent resistance, chemical resistance, heat resistance, low-temperature properties, low moisture permeability, electrical properties, and shelf stability.

The inventors have discovered that a fluoropolyether rubber composition comprising (A) a polyfluoro compound having at least two alkenyl groups per molecule, (B) a fluorinated organohydrogenpolysiloxane having at least one perfluorooxyalkyl, perfluoroalkyl, perfluorooxyalkylene or perfluoroalkylene group and at least two silicon-bonded hydrogen atoms (i.e., Si-H groups) per molecule, (C) a platinum group compound, (D) hydrophobic silica powder, and (E) an antioxidant cures briefly at room temperature into a product having the advantages of solvent resistance, chemical resistance, heat resistance, low-temperature properties, low moisture permeability, and electrical properties, and the composition is shelf stable. The invention provides a room temperature curable fluoropolyether rubber composition comprising (A) a polyfluoro compound, (B) a fluorinated organohydrogenpolysiloxane having at least one perfluorooxyalkyl, perfluoroalkyl, perfluorooxyalkylene or perfluoroalkylene group and at least two silicon-bonded hydrogen atoms per molecule, (C) a catalytic amount of a platinum group compound, (D) hydrophobic silica powder, and (E) an antioxidant. The polyfluoro compound (A) has the general formula (1):

CH₂=CH-(X)ₐ-Rf-(X')ₐ-CH=CH₂ (1)

wherein X is -CH₂-, -CH₂O-, -CH₂OCH₂- or -Y-NR-CO-; Y is -CH₂-or an o-, m- or p-dimethylsilylphenylene group of structural formula (Z): 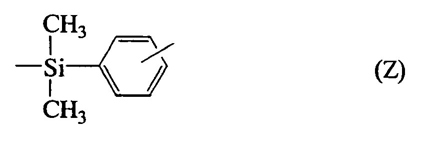 and R is hydrogen or a substituted or unsubstituted monovalent hydrocarbon group; X' is -CH₂-, -OCH₂-, -CH₂OCH₂-or -CO-NR-Y'-; Y' is -CH₂- or an o-, m- or p-dimethylsilylphenylene group of structural formula (Z'): 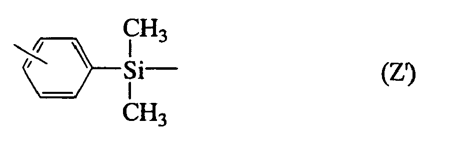 and R is as defined above; the subscript "a" is independently 0 or 1; Rf is a divalent perfluoropolyether group of the general formula (i):

-CₜF₂ₜ-[OCF₂CF(CF₃)]ₚ-O-CF₂(CF₂)ᵣCF₂-O-[CF(CF₃)CF₂O]_{q}-CₜF₂ₜ- (i)

wherein p and q are integers of 1 to 150, the sum of p and q is 2 to 200, r is an integer of 0 to 6, and t is 2 or 3, or the general formula (ii):

-CₜF₂ₜ-[OCF₂CF(CF₃)]ᵤ-(OCF₂)ᵥ-OCₜF₂ₜ- (ii)

wherein u is an integer of 1 to 200, v is an integer of 1 to 50, and t is as defined above.

In a preferred embodiment, the components are present as a first part consisting of components (A), (C), (D) and (E) and a second part consisting of components (A), (B) and (D), and the first and second parts are mixed on use.

A cured product obtained by heat curing the composition is also provided.

### Advantageous Effects

The fluoropolyether rubber compositions disclosed are found to cure rapidly at room temperature into cured products having the advantages of solvent resistance, chemical resistance, heat resistance, low-temperature properties, low moisture permeability, and electrical properties. The composition has shelf stability.

### DESCRIPTION OF EMBODIMENTS

In the specification, the singular forms "a," "an" and "the" include plural referents unless the context clearly dictates otherwise. In the formulas, "Me" stands for methyl, "Ph" for phenyl, and Ph' for phenylene

### Component A

Component (A) is a polyfluoro compound having at least two alkenyl groups per molecule and preferably represented by the general formula (1).

CH₂=CH-(X)ₐ-Rf-(X')ₐ-CH=CH₂ (1)

Herein X is -CH₂-, -CH₂O-, -CH₂OCH₂- or -Y-NR-CO-, wherein Y is -CH₂- or an o-, m- or p-dimethylsilylphenylene group of structural formula (Z): 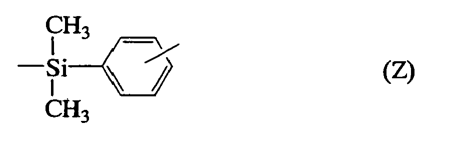 and R is hydrogen or a substituted or unsubstituted monovalent hydrocarbon group. X' is -CH₂-, -OCH₂-, -CH₂OCH₂-or -CO-NR-Y'-, wherein Y' is -CH₂- or an o-, m- or p-dimethylsilylphenylene group of structural formula (Z'): 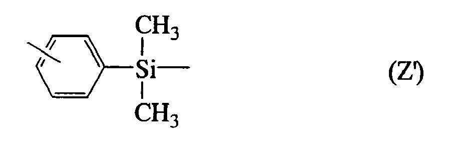 and R is as defined above. Rf is a divalent perfluoropolyether group, and "a" is each independently 0 or 1.

R is hydrogen or a substituted or unsubstituted, monovalent hydrocarbon group having preferably 1 to 12 carbon atoms, and more preferably 1 to 10 carbon atoms. Specific examples of hydrocarbon groups include alkyl groups such as methyl, ethyl, propyl, butyl, hexyl, cyclohexyl and octyl; aryl groups such as phenyl and tolyl; aralkyl groups such as benzyl and phenylethyl; and substituted forms of the foregoing in which some or all hydrogen atoms are substituted by halogen atoms such as fluorine.

Rf is a divalent perfluoropolyether structure, preferably having the general formula (i) or (ii).

-CₜF₂ₜ-[OCF₂CF(CF₃)]ₚ-O-CF₂(CF₂)ᵣCF₂-O-[CF(CF₃)CF₂O]_{q}-CₜF₂ₜ- (i)

In formula (i), p and q are integers of 1 to 150, the sum of p and q is 2 to 200, r is an integer of 0 to 6, and t is 2 or 3.

-CₜF₂ₜ-[OCF₂CF(CF₃)]ᵤ-(OCF₂)ᵥ-OCₜF₂ₜ- (ii)

In formula (ii), u is an integer of 1 to 200, v is an integer of 1 to 50, and t is as defined above.

Preferred examples of Rf group include those of the following three formulas: 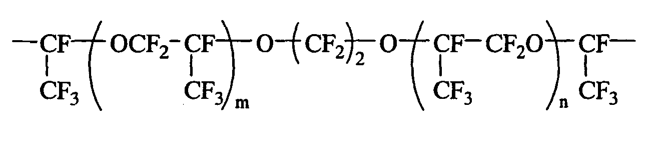 wherein m and n are each an integer of at least 1, and the sum of m+n is from 2 to 200; 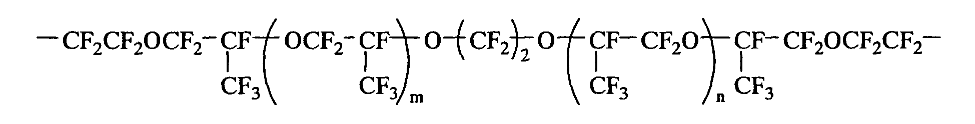 wherein m and n are each an integer of at least 1, and the sum of m+n is from 2 to 200; and 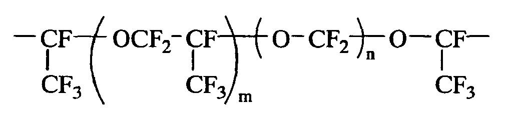 wherein m is an integer of 1 to 200, and n is an integer of 1 to 50. Of these, the divalent groups with the structure of the first formula are most preferred. Examples of the polyfluoro compound of formula (1) are given below.

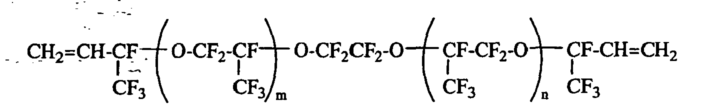

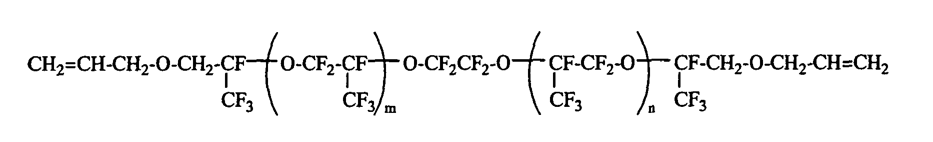

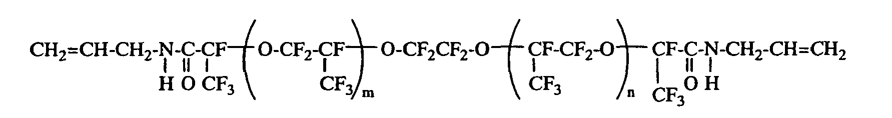

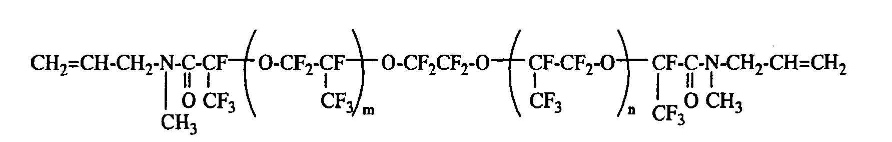

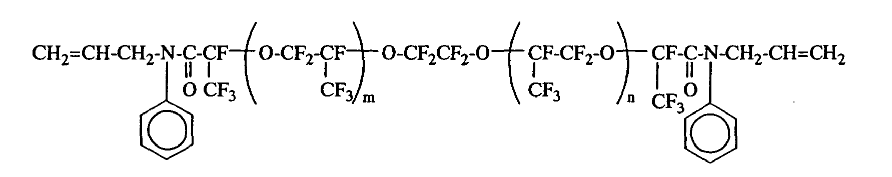

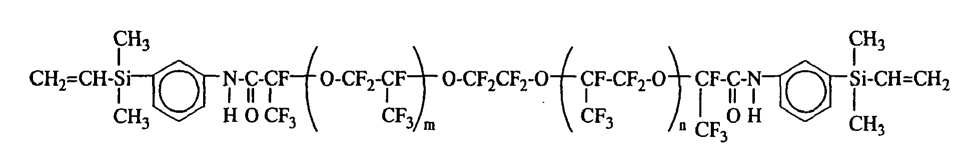

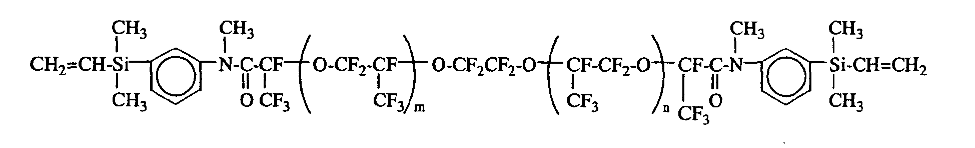

In the above formulas, m and n are each an integer of at least 1, and the sum of m+n is from 2 to 200.

Desirably, the linear polyfluoro compound of formula (1) has a viscosity at 23°C in the range of 5 to 100,000 mPa-s, preferably 5,000 to 50,000 mPa-s, as measured by a rotational viscometer.

These polyfluoro compounds may be used singly or as a combination of two or more thereof.

### Component B

Component (B) is a fluorinated organohydrogenpolysiloxane having at least two, preferably at least three silicon-bonded hydrogen atoms (sometimes referred to below as hydrosilyl groups, or Si-H groups) per molecule. It functions as a crosslinker or chain extender for component (A).

For good compatibility with and dispersibility in component (A) and uniformity after curing, component (B) should have on the molecule at least one fluorine-bearing group selected from among monovalent perfluoroalkyl groups, monovalent perfluorooxyalkyl groups, divalent perfluoroalkylene groups and divalent perfluorooxyalkylene groups.

Illustrative examples of such fluorine-bearing groups include those of the following general formulas:

C_{g}F_{2g+1}-

(wherein g is an integer from 1 to 20, and preferably from 2 to 10),

-C_{g}F_{2g}-

(wherein g is an integer from 1 to 20, and preferably from 2 to 10),

F-[CF(CF₃)CF₂O]_{f}-CₕF₂ₕ-

(wherein f is an integer from 2 to 200, and preferably from 2 to 100, and h is an integer from 1 to 3),

-CF(CF₃)-[OCF₂CF(CF₃)]ᵢ-O-CF₂CF₂-O-[CF(CF₃)CF₂O]ⱼ-CF(CF₃)-

(wherein i and j are each an integer of at least 1, the sum of i+j is from 2 to 200, and preferably from 2 to 100), and

- (CF₂CF₂O)ᵣ-(CF₂O)ₛ-CF₂-

(wherein r and s are each an integer of at least 1 and the sum of r+s is from 2 to 200, and preferably from 2 to 100).

Divalent linkages for connecting the above perfluoroalkyl, perfluorooxyalkyl, perfluoroalkylene or perfluorooxyalkylene groups to silicon atoms include alkylene and arylene groups and combinations thereof, which may be separated by an ether bond, amide bond, carbonyl bond or the like. Specific examples include linkages having 2 to 12 carbon atoms, such as -CH₂CH₂-, -CH₂CH₂CH₂-, -CH₂CH₂CH₂OCH₂-, -CH₂CH₂CH₂-NH-CO-, -CH₂CH₂CH₂-N(Ph)-CO-, -CH₂CH₂CH₂-N(CH₃)-CO-, and -CH₂CH₂CH₂-O-CO-, and -Ph'-N(CH₃)-CO-.

Besides the organic group containing a mono- or divalent fluorinated substituent, i.e., perfluoroalkyl, perfluorooxyalkyl, perfluoroalkylene or perfluorooxyalkylene group, the fluorinated organohydrogenpolysiloxane as component (B) has a monovalent substituent bonded to a silicon atom, examples of which include substituted or unsubstituted C₁-C₂₀ hydrocarbon groups, for example, alkyl groups such as methyl, ethyl, propyl, butyl, hexyl, cyclohexyl, octyl and decyl, alkenyl groups such as vinyl and allyl, aryl groups such as phenyl, tolyl and naphthyl, aralkyl groups such as benzyl and phenylethyl, and substituted forms of the foregoing in which at least some hydrogen atoms are substituted by chlorine atoms, cyano groups or the like, such as chloromethyl, chloropropyl and cyanoethyl.

The fluorinated organohydrogenpolysiloxane as component (B) may have a cyclic, chain-like or three-dimensional network structure or combinations thereof.

Although no particular limit is imposed on the number of silicon atoms in the fluorinated organohydrogenpolysiloxane, it generally has 3 to 60 silicon atoms, and preferably 4 to 30 silicon atoms.

Examples of the fluorinated organohydrogenpolysiloxane as component (B) are given below. These compounds may be used alone or in admixture.

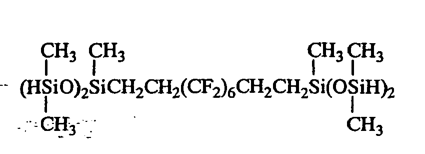

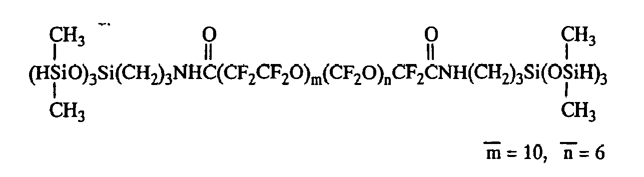

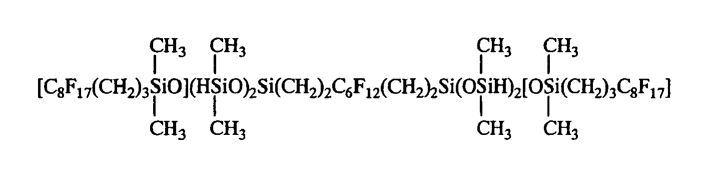

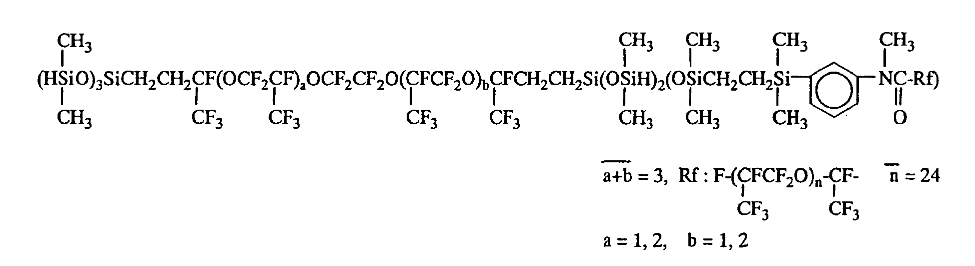

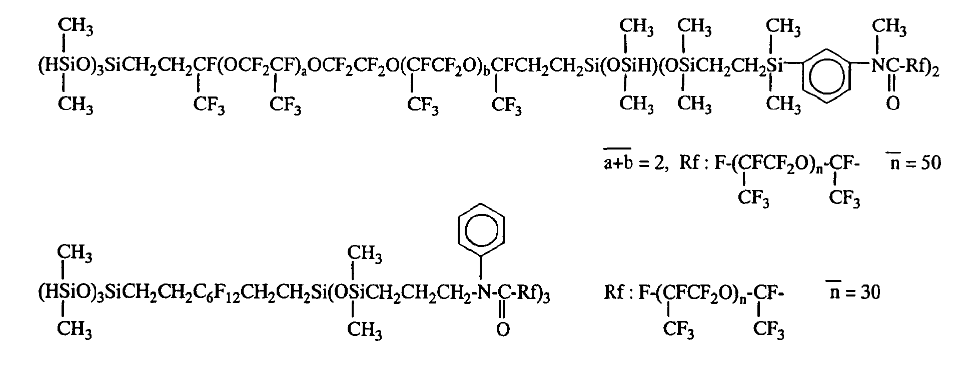

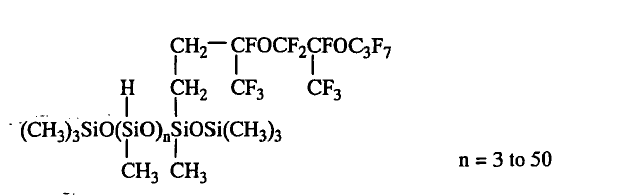

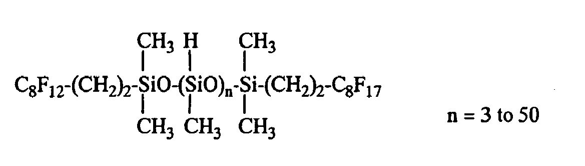

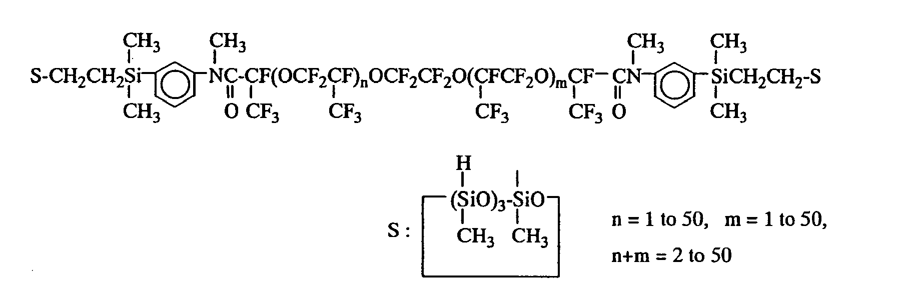

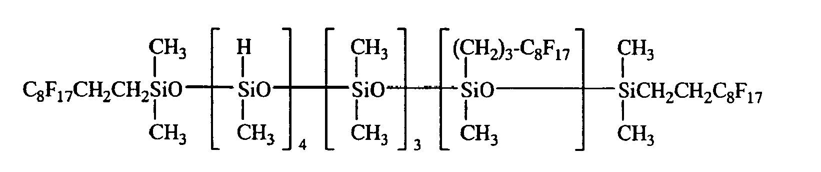

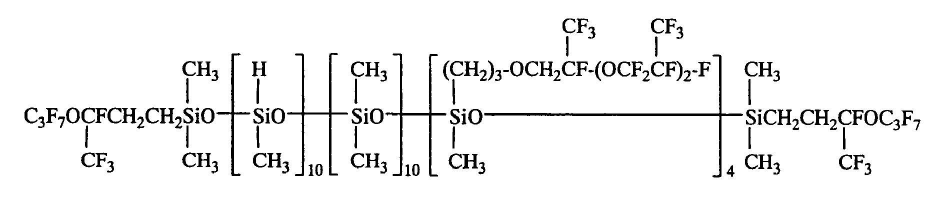

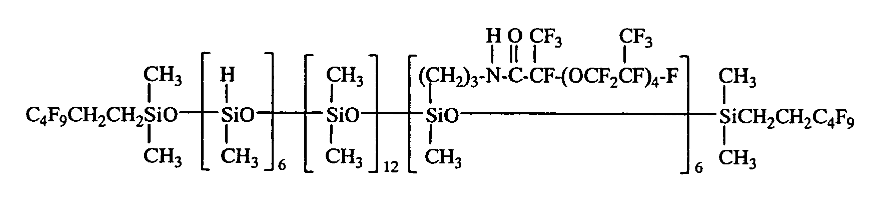

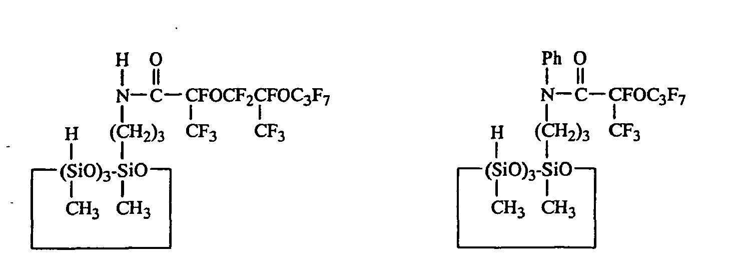

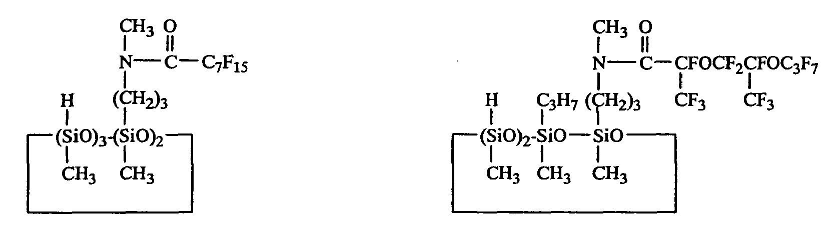

Component (B) is included in an amount effective for curing component (A), and preferably an amount corresponding to 0.5 to 5.0 moles, and more preferably 1.0 to 2.0 moles, of hydrosilyl (Si-H) groups on component (B) per mole of total alkenyl groups (e.g., vinyl, allyl, cycloalkenyl groups) on component (A). If there are too few hydrosilyl groups, a sufficient degree of crosslinking may not be reached, resulting in an under-cured product. On the other hand, too many hydrosilyl groups may lead to such drawbacks as preferential chain extension, under-cure, foaming and poor heat resistance.

As the crosslinker (B), the compound which is compatible with component (A) is desirably selected in order to obtain a uniform cured product.

### Component C

Component (C) is a hydrosilylation catalyst which promotes addition reaction between alkenyl groups in component (A) and hydrosilyl groups in component (B). Such hydrosilylation catalysts are generally noble metal compounds which are expensive. Of these, use is often made of platinum and platinum compounds which are more readily available.

Exemplary platinum compounds include chloroplatinic acid and complexes of chloroplatinic acid with olefins (e.g., ethylene), alcohols or vinyl siloxanes, and metallic platinum on supports such as silica, alumina and carbon. Known platinum group metal catalysts other than platinum compounds include rhodium, ruthenium, iridium and palladium compounds, specific examples of which are RhCl(PPh₃)₃, RhCl(CO)(PPh₃)₂, Ru₃(CO)₁₂, IrCl(CO)(PPh₃)₂ and Pd(PPh₃)₄.

Component (C) may be used in a catalytic amount, for example, in an amount of 0.1 to 500 ppm of platinum group metal based on the total weight of components (A) and (B).

### Component D

Component (D) is hydrophobic silica powder which functions to impart appropriate physical strength to the cured product of the composition.

This hydrophobic silica powder is obtained by hydrophobic treatment of finely divided silica which is well known as a filler for silicone rubber. The silica powder should preferably have a specific surface area of at least 50 m²/g, and more preferably 50 to 400 m²/g, as measured by the standard BET method. If the BET specific surface area is less than 50 m²/g, the cured product may have insufficient physical strength. If the surface area is more than 400 m²/g, the silica powder may be unevenly dispersed, interfering with compounding operation.

Examples of the finely divided silica include fumed silica, precipitated silica and colloid silica, with the fumed silica being most preferred.

Hydrophobic agents used in the treatment of finely divided silica are typically silicon compounds including organochlorosilanes such as trimethylchlorosilane, dimethylvinylchlorosilane, and dimethyldichlorosilane; organosilazanes such as hexamethyldisilazane, 1,3-divinyl-1,1,3,3-tetramethyldisilazane, and hexamethylcyclotrisilazane; and organohydroxysilanes such as trimethylhydroxysilane and dimethylhydroxysilane, which may be used alone or in admixture. Fluorinated organosilanes and fluorinated organosiloxanes are also useful as the hydrophobic agent for finely divided silica. The fluorinated organosilanes and organosiloxanes used herein may be organosilanes and organosiloxanes having per molecule at least one monovalent perfluorooxyalkyl, monovalent perfluoroalkyl, divalent perfluorooxyalkylene or divalent perfluoroalkylene group, and at least one silicon-bonded hydroxyl group and/or alkoxy group (preferably C₁-C₆, more preferably C₁-C₄ alkoxy). Their molecular structure is not particularly limited.

In a preferred mode of hydrophobic treatment of silica with fluorinated organosilanes or organosiloxanes, the hydrophobic agent may be added when a mixture of linear polyfluoro compound (A) and finely divided silica is heat kneaded in a milling means such as a kneader. If necessary, a small amount of water is added before heat treatment is performed, thereby effecting silanol treatment on silica particle surfaces. The heat treatment is performed at a temperature in the range of 100 to 200°C. This improves the miscibility of hydrophobic silica powder (D) with other components for thereby restraining the composition from the "crepe hardening" phenomenon during shelf storage and ameliorating the flow of the composition.

(D) is usually compounded in an amount of 5 to 50 parts by weight, preferably 10 to 30 parts by weight per 100 parts by weight of component (A). If the amount of component (D) is less than 5 pbw, cured physical properties may be poor. If the amount of component (D) exceeds 50 pbw, the resulting composition may become less flowing and inefficient to work and mold, and cured physical properties may be poor.

### Component E

Component (E) is an antioxidant which functions to inhibit oxidation of alkenyl and other organic groups on component (A) and to prevent the platinum group compound (C) from losing its catalytic activity. In those compositions characterized by brief curing at room temperature as in the invention, the platinum group compound (C) is added in a larger amount, and hence, alkenyl and other organic groups on component (A) are susceptible to more oxidative degradation. Particularly when alkenyl groups are oxidized, not only a reduced amount of functional groups are available for curing reaction, but also hydroperoxide and other oxides resulting from oxidation can deprive the platinum group compound of its catalytic activity. In order to prevent these factors from retarding cure or causing defective cure during long-term storage, the addition of antioxidant (E) is essential.

Suitable antioxidants include phenolic compounds, amines, sulfur compounds, phosphorus compounds, waxes, and metal complexes of the foregoing, and naturally occurring compounds and derivatives thereof such as vitamin C (L-ascorbic acid), vitamin E (α-tocopherol) and kojic acid. Most of these compounds are commercially available and any commercially available antioxidants may be used herein.

Suitable phenolic antioxidants include mono- and dihydric phenols of the following formula: 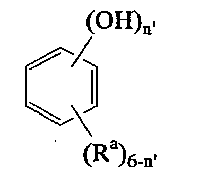 wherein R^{a} is hydrogen or C₁-C₁₀ hydrocarbon group, and n' is 1 or 2, for example, phenol, o-cresol, m-cresol, p-cresol, catechol, resorcinol, hydroquinone, 2,6-di-t-butyl-4-methylphenol, 2,6-di-t-butyl-4-ethylphenol, 2,4-dimethyl-6-(1-methylcyclohexyl)phenol, 2,5-di-t-butylhydroquinone, and 2,5-di-t-pentylhydroquinone; and polynuclear phenols of the following formulas.

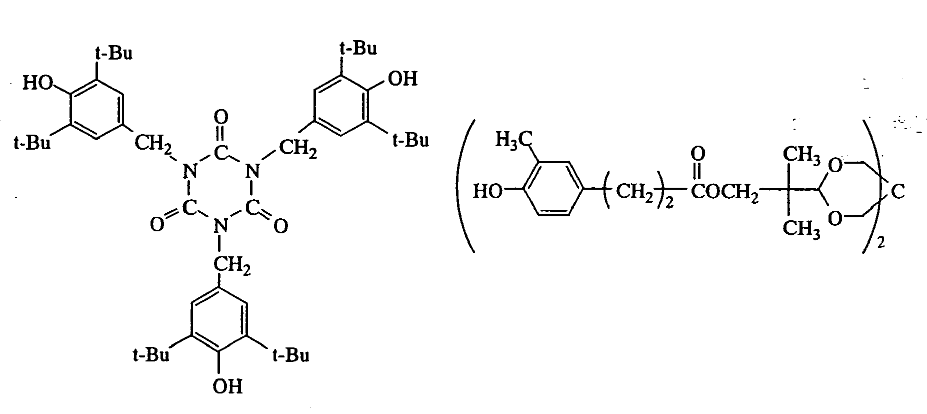

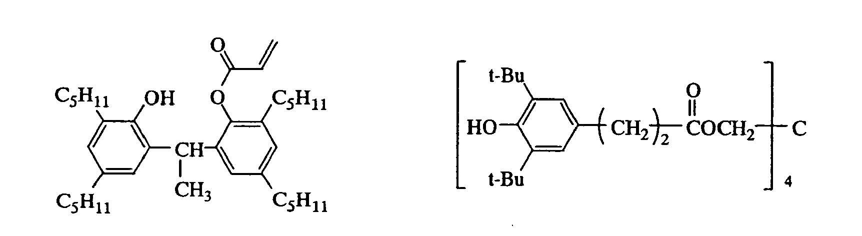

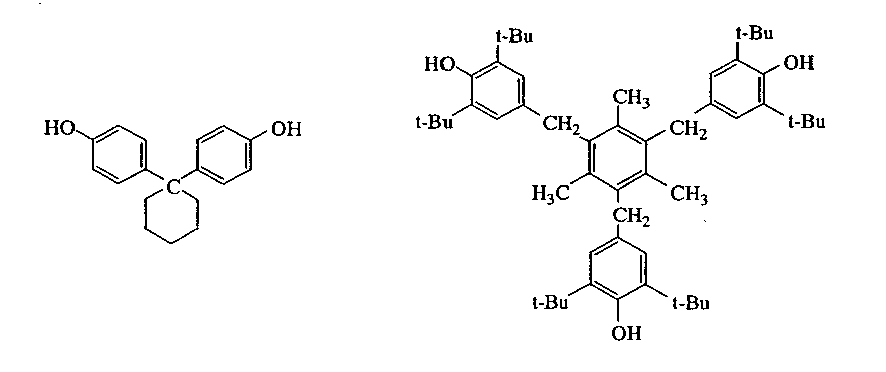

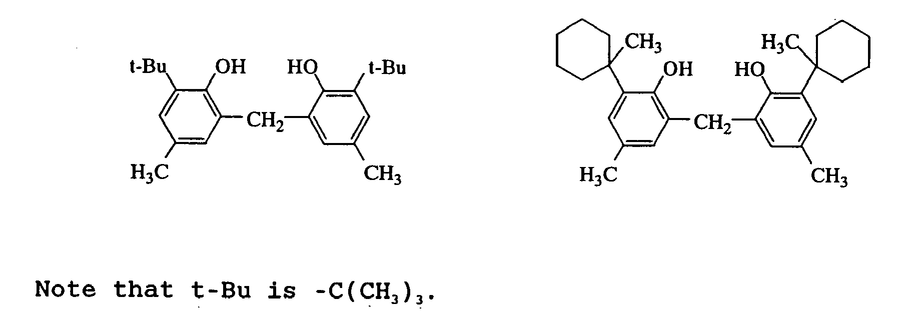

Suitable amine antioxidants include those of the following formulas.

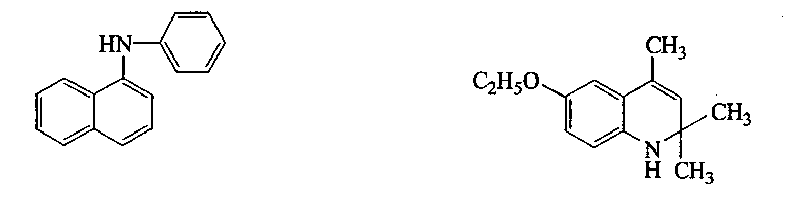

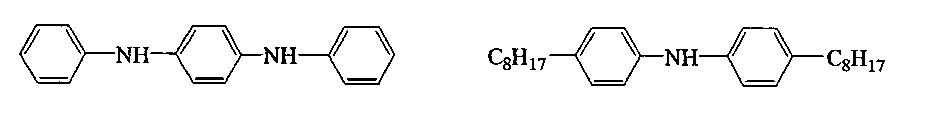

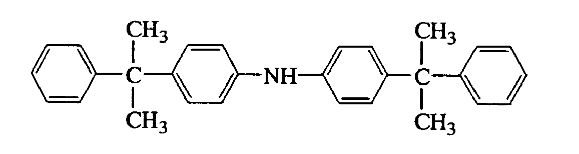

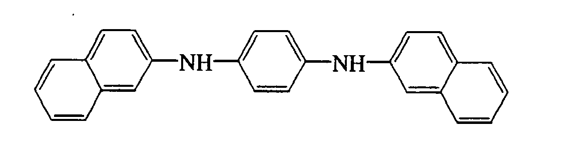

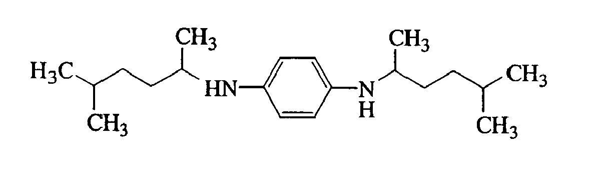

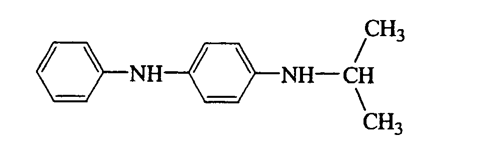

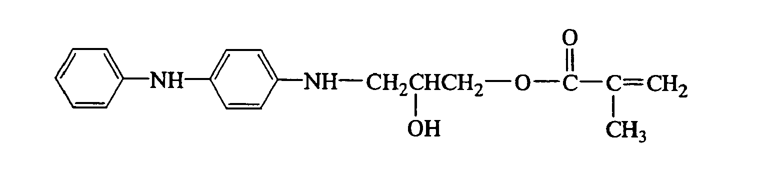

Suitable sulfur, phosphorus, metal complex and composite antioxidants include those of the following formulas.

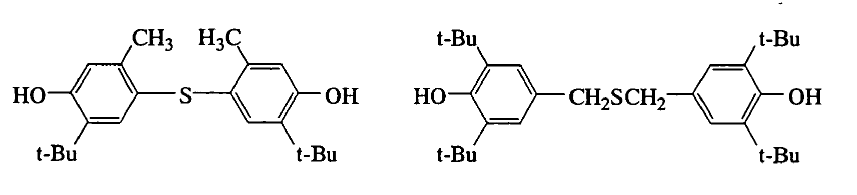

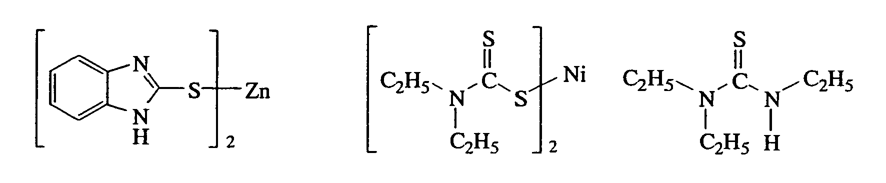

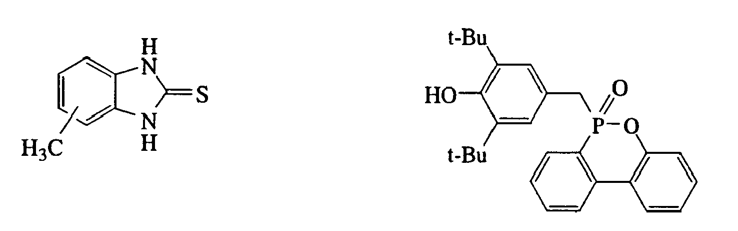

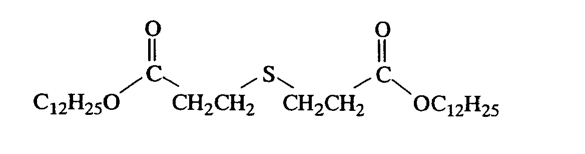

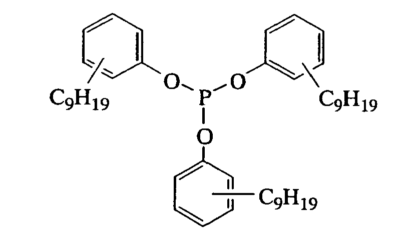

### Note that t-Bu is -C(CH₃)₃.

Component (E) is preferably compounded in an amount of 0.01 to 10% by weight, more preferably 0.05 to 5% by weight based on the overall composition consisting of components (A) to (E). Less amounts of the antioxidant may fail to achieve the desired addition effect whereas excessive amounts may affect rubber physical properties after curing, for example, detracting from strength.

Since some phosphorus or sulfur-containing antioxidants can deprive the platinum group compound (C) substantially of its catalytic activity in addition reaction, it is rather desirable to use naturally occurring, phenolic and amine antioxidants.

### Other components

In addition to above components (A) to (E), optional ingredients may also be included in the fluoropolyether rubber composition of the invention to increase its utility. Such optional ingredients include plasticizers, viscosity modifiers, flexibilizers, hydrosilylation catalyst regulators, inorganic fillers (exclusive of component D), and the like. These additives may be included in any respective amounts that allow the objects of the invention to be attained and that do not compromise the properties of the composition or the physical properties of the cured product thereof.

Polyfluoromonoalkenyl compounds of the general formula (2) below and/or polyfluoro compounds of the general formulas (3) and (4) below may be used as the plasticizer, viscosity modifier and/or flexibilizer.

Rf²-(X')ₐ-CH=CH₂ (2)

In formula (2), X' and "a" are as defined above, and Rf² has the general formula (iii):

F-[CF(CF₃)CF₂O]_{w}-CₜF₂ₜ- (iii)

wherein t is as defined above, and w is an integer of 1 to 150 which is smaller than the sum of p+q plus r and smaller than the sum u+v for the Rf group in above component (A).

A-O-(CF₂CF₂CF₂O)_{c}-A (3)

In formula (3), A is a group of the formula: CₛF₂ₛ₊₁-, wherein s is 1 to 3, and c is an integer of 1 to 200 which is smaller than the sum of p+q plus r and smaller than the sum u+v for the Rf group in above component (A).

A-O-(CF₂O)_{d}(CF₂CF₂O)ₑ-A (4)

In formula (4), A is as defined above, and d and e are each integers of 1 to 200 such that the sum d+e is smaller than the sum of p+q plus r and smaller than the sum u+v for the Rf group in above component (A).

Examples of polyfluoromonoalkenyl compounds of formula (2) include those of the following structural formulas.

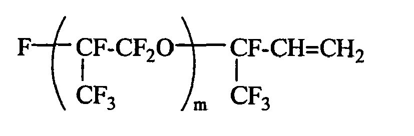

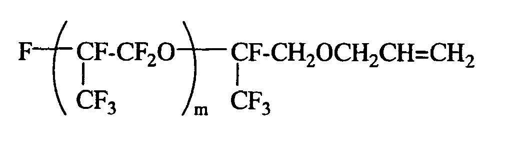

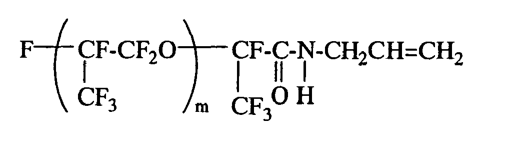

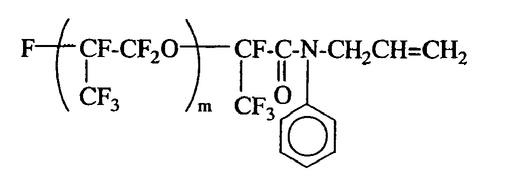

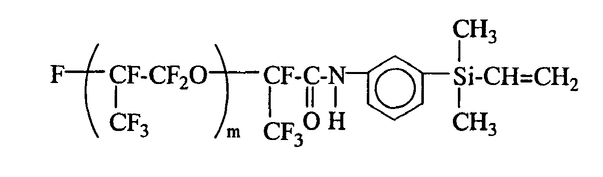

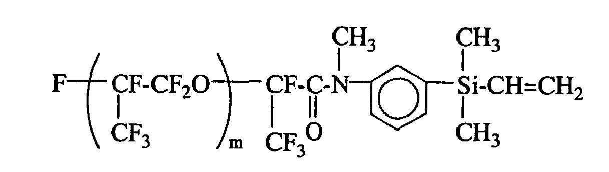

Herein m is an integer of 1 to 200.

Examples of polyfluoro compounds of formulas (3) and (4) include those of the following structural formulas.

CF₃O-(CF₂CF₂CF₂O)ₙ-CF₂CF₃

CF₃-[(OCF₂CF₂)ₙ(OCF₂)ₘ]-O-CF₃

Herein m and n are each an integer from 1 to 200, and the sum m+n is from 1 to 200.

In the composition, the polyfluoro compound of formula (2), (3) or (4) is preferably included in an amount of 1 to 100 parts, and more preferably 10 to 50 parts by weight, per 100 parts by weight of component (A). Less than 1 pbw of the polyfluoro compound may fail to achieve the desired addition effect whereas more than 50 pbw may adversely affect the hardness and rubber strength of the cured product and is thus undesired in the application where such cured physical properties are required.

Illustrative examples of suitable hydrosilylation catalyst regulators include acetylenic alcohols such as 1-ethynyl-1-hydroxycyclohexane, 3-methyl-1-butyn-3-ol, 3,5-dimethyl-1-hexyn-3-ol, 3-methyl-1-penten-3-ol and phenylbutynol; 3-methyl-3-penten-1-yne, 3,5-dimethyl-3-hexen-1-yne and triallyl isocyanurate; polyvinylsiloxane compounds and organophosphorus compounds. The addition of these compounds helps to achieve an appropriate balance of curing reactivity and shelf stability.

Illustrative examples of inorganic fillers include reinforcing or semi-reinforcing fillers such as calcium carbonate; inorganic pigments such as titanium oxide, iron oxide, carbon black and cobalt aluminate; heat stabilizers such as titanium oxide, iron oxide, carbon black, cerium oxide, cerium hydroxide, zinc carbonate, magnesium carbonate and manganese carbonate; heat conductive agents such as alumina, boron nitride, silicon carbide and metal powders; and electrical conductive agents such as carbon black, silver powder and conductive zinc oxide. Besides, organic pigments and other organic compounds may also be added. These additives may be added in any desired amounts as long as the objects of the invention are not compromised.

### Preparation and Use of Composition

No particular limitation is imposed on the method for preparing the composition. For example, the composition may be prepared by uniformly mixing components (A) to (E) and other optional ingredients on a suitable mixing apparatus such as a planetary mixer, Ross mixer, Hobart mixer or two-roll mill.

On storage, the components are preferably grouped in two parts, a first including or consisting of (A), (C), (D) and (E) and a second including or consisting of (A), (B) and (D). On use, the first and second parts are mixed together. The packaging of the composition in two parts has the advantages of shelf stability and ease of handling because curing reaction does not start until the two parts are mixed and the composition can be stored at room temperature for a long period of time.

Prior to the use of the room temperature curable fluoropolyether rubber composition, it may be dissolved in a solvent in an appropriate concentration depending on its application or service use. Suitable solvents include fluorochemical solvents (solvents containing fluorine in their molecule), such as m-xylene hexafluoride, alkyl perfluoroalkyl ethers, perfluoroalkyl ethers, and mixtures thereof. Of these fluorochemical solvents, those having a boiling point of up to 150°C are preferred for ease of coating.

Where the composition must be bonded to a substrate of metal or organic resin, the substrate is preferably treated with a primer before the composition is applied thereto.

While the fluoropolyether rubber composition of the invention cures even at room temperature within a short time into a product having the advantages of chemical resistance, solvent resistance, low moisture permeability, and heat resistance, it is adherent and bondable to various substrates and is less fouling and less residual. Because of these advantages, the composition finds use in many applications, for example, as back side protective coating during etching of silicon wafers, moisture-proof masks on electrodes in LC displays and PDP, protective coating during etching of LC glass, masks during coating of cream solder, masks during etching of flexible copper-clad printed boards, and oil resistant protective coating on automotive electronic parts. Since the composition cures at room temperature and has rubber physical properties, it can be readily applied to those places where heating should be avoided during application. Such examples include rubber parts in chemical plants such as O-rings, packings, oil seals, and gaskets; rubber parts in aircraft such as O-rings, face seals, packings, and gaskets in fluid piping for engine oil, jet fuel, hydraulic oil and Skydrol®.

### EXAMPLE

Examples and Comparative Examples are given below by way of illustration of the invention and not by way of limitation. All parts are by weight (pbw).

### Examples 1 to 3 & Comparative Example 1

Compositions were prepared by compounding components as Parts A and B in accordance with the formulation of Table 1.

**Table 1**

| Component (pbw) | | Example 1 | | Example 2 | | Example 3 | | Comparative Example 1 | |
|---|---|---|---|---|---|---|---|---|---|
| | | Part A | Part B | Part A | Part B | Part A | Part B | Part A | Part B |
| A | A-1 | 100 | 100 | 100 | 100 | | | 100 | 100 |
| | A-2 | | | | | 100 | 100 | | |
| B | B-1 | | 5.71 | | 7.13 | | 7.13 | | 7.13 |
| | B-2 | | 1.44 | | | | | | |
| C | C-1 | 0.20 | | 0.20 | | 0.30 | | 0.20 | |
| D | D-1 | 10.0 | 10.0 | 15.0 | 15.0 | 10.0 | 10.0 | 10.0 | 10.0 |
| E | E-1 | 0.20 | | | | | | | |
| | E-2 | | | 0.20 | | 0.30 | | | |

### A-1: polymer of the formula:

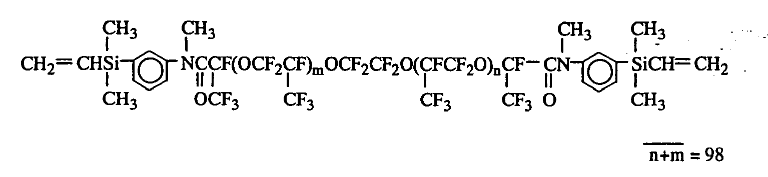

### A-2: polymer of the formula:

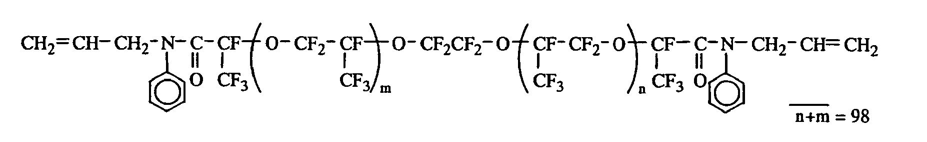

### B-1: fluorine-modified organosilicon compound of the formula:

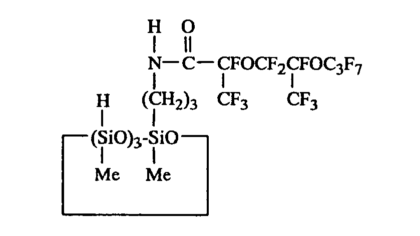

### B-2: fluorine-modified organosilicon compound of the formula:

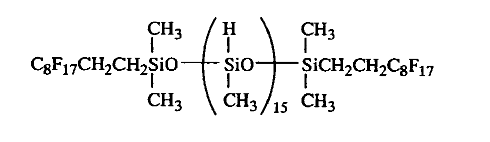

### B-3: organosilicon compound of the formula:

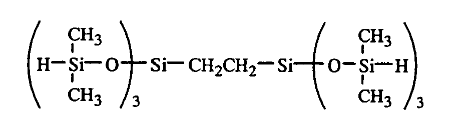

### C-1: chloroplatinic acid-vinyl siloxane complex in toluene (platinum concentration 0.5 wt%)

### D-1: Aerosil R976 (Aerosil Co.)

### E-1: 2,6-di-t-butyl-4-methylphenol (BHT)

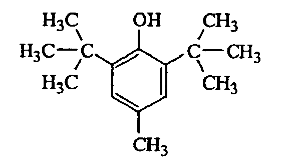

### E-2: α-tocopherol (vitamin E)

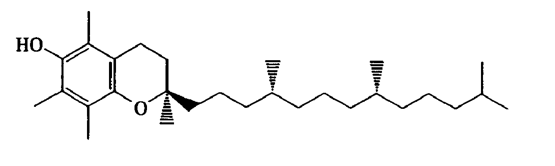

### Evaluation of compositions

1. Cure test
   In each Example, Parts A and B were thoroughly mixed and cast into a mold of 100x150x2 mm where the composition was held at room temperature (23°C) for one hour, after which its cured state was examined.
2. Shelf stability
   In each Example, Parts A and B were separately held at 40°C for 2 weeks before the same cure test as above was performed. The cured state of aged sample was compared with that of fresh sample.
3. Rubber physical properties
The cured product obtained in the above cure test was measured for rubber physical properties.
The results are shown in Table 2.

**Table 2**

| Test item | | Example 1 | Example 2 | Example 3 | Comparative Example 1 |
|---|---|---|---|---|---|
| Cure | | Good | Good | Good | Good |
| Shelf stability | | Intact | Intact | Intact | Under-cured |
| Physical properties | Hardness | 38 | 43 | 36 | 35 |
| | Tensile strength, MPa | 4.6 | 6.3 | 5.6 | 5.0 |
| | Elongation at break, % | 220 | 310 | 280 | 280 |

## Claims

1. A room temperature curable fluoropolyether rubber composition comprising
(A) a polyfluoro compound having the general formula (1):
CH₂=CH-(X)ₐ-Rf-(X')ₐ-CH=CH₂ (1)
wherein X is -CH₂-, -CH₂O-, -CH₂OCH₂- or -Y-NR-CO-; Y is -CH₂-or an o-, m- or p-dimethylsilylphenylene group of structural formula (Z): 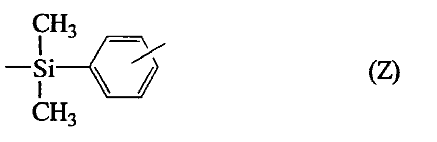 and R is hydrogen or a substituted or unsubstituted monovalent hydrocarbon group; X' is -CH₂-, -OCH₂-, -CH₂OCH₂- or -CO-NR-Y'-; Y' is -CH₂- or an o-, m- or p-dimethylsilylphenylene group of structural formula (Z'): 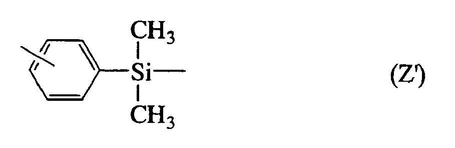 and R is as defined above;
the subscript "a" is independently 0 or 1;
Rf is a divalent perfluoropolyether group of the general formula (i):
-CₜF₂ₜ-[OCF₂CF(CF₃)]ₚ-O-CF₂(CF₂)ᵣCF₂-O-[CF(CF₃)CF₂O]_{q}-CₜF₂ₜ- (i)
wherein p and q are integers of 1 to 150, the sum of p and q is 2 to 200, r is an integer of 0 to 6, and t is 2 or 3, or the general formula (ii):
-CₜF₂ₜ-[OCF₂CF(CF₃)]ᵤ-(OCF₂)ᵥ-OCₜF₂ₜ- (ii)
wherein u is an integer of 1 to 200, v is an integer of 1 to 50, and t is as defined above,
(B) a fluorinated organohydrogenpolysiloxane having at least one perfluorooxyalkyl, perfluoroalkyl, perfluorooxyalkylene or perfluoroalkylene group and at least two silicon-bonded hydrogen atoms per molecule,
(C) a catalytic amount of a platinum group compound,
(D) hydrophobic silica powder, and
(E) an antioxidant.

2. The room temperature curable fluoropolyether rubber composition of claim 1 wherein the components are present as a first part consisting of components (A), (C), (D) and (E) and a second part consisting of components (A), (B) and (D), and the first and second parts are mixed on use.

3. A cured product obtained by heat curing the composition of claim 1 or 2.
